# EUROPÄISCHE PATENTANMELDUNG

(11) **EP 1 712 409 A1**
(43) Veröffentlichungstag der Anmeldung: **18.10.2006**
(21) Anmeldenummer: 05007960.7
(22) Anmeldetag: 12.04.2005
(51) Int. Cl.: B60N 2/58, A47C 31/02

(54) **Befestigungsband für Kraftfahrzeugpolstersitze**

(71) Anmelder: Strähle & Hess GmbH & Co. KG, 75382 Althengstett (DE)
(72) Erfinder: Hirlinger, Martin, 72766 Reutlingen (DE)
(74) Vertreter: Hoeger, Stellrecht & Partner Patentanwälte

(57) **Zusammenfassung**

Die Erfindung betrifft ein Befestigungsband (10) zum Befestigen eines ersten Polsterteils (16) an einem zweiten Polsterteil (30) bei Polstersitzen, insbesondere in Kraftfahrzeugen, wobei das Befestigungsband (10) schlauchförmig ausgebildet ist, in Längsrichtung mit dem ersten Polsterteil (16) verbunden ist und an der dem ersten Polsterteil (16) abgewandten Seite (18) Aussparungen (12) aufweist, so dass mit dem zweiten Polsterteil (30) verbundene Verankerungselemente (32) in die Aussparungen (12) eingreifen und einen in das Befestigungsband (10) einführbaren Draht (28) fixieren können, wodurch das erste Polsterteil (16) an dem zweiten Polsterteil (30) befestigbar ist. Um ein derartiges Befestigungsband (10) zur Verfügung zu stellen, bei dem ein Draht (28) nach dem Ausbilden der Aussparungen (12) problemlos eingeführt werden kann, wird erfindungsgemäß vorgeschlagen, dass das Befestigungsband (10) ein entfernbares Trennelement (20) aufweist, welches das Befestigungsband (10) in Längsrichtung in zwei getrennte, schlauchförmige Bereiche (22, 26) unterteilt, wobei in den oberen, dem ersten Polsterteil (16) zugewandte Bereich (22) der Draht (28) in Längsrichtung einführbar ist, und wobei die Aussparungen (12) in dem unteren, dem ersten Polsterteil (16) abgewandten Bereich (26) angeordnet sind, so dass bei Entfernung des Trennelements (20) der eingeführte Draht (28) in den unteren Bereich (26) verschiebbar ist.

## Beschreibung

Die vorliegende Erfindung betrifft ein Befestigungsband zum Befestigen eines ersten Polsterteils an einem zweiten Polsterteil bei Polstersitzen, insbesondere in Kraftfahrzeugen, nach dem Oberbegriff des Patentanspruchs 1.

Derartige schlauchförmige Befestigungsbänder, in die seitlich ein Metalldraht eingeführt wird, werden bei Kraftfahrzeugpolstersitzen seit längerem verwendet und sind zum Beispiel in der DE 38 07 662 A1 beschrieben. Ein Nachteil dieser Befestigungsbänder besteht darin, dass die Aussparungen, die für die Fixierung des Drahtes an den Verankerungselementen des zweiten Polsterteils erforderlich sind, erst nach dem Einführen des Drahtes in das Befestigungsband gebildet werden können, da andernfalls beim Einführen des Drahtes dieser an einer der Aussparungen unerwünscht austritt. Dies gilt insbesondere dann, wenn aufgrund der Strukturen der Polstersitze gebogene Drähte verwendet werden müssen.

Das Ausbilden der Aussparungen nach Einführen des Drahtes kann jedoch nur manuell erfolgen und erfordert daher einen hohen zeitlichen Aufwand. Die Verwendung eines Befestigungsbandes mit vorgeformten Aussparungen würde daher zu einer deutlichen Zeit- und Kostenersparnis führen.

Aufgabe der vorliegenden Erfindung ist es, ein gattungsgemäßes Befestigungsband vorzuschlagen, bei dem ein Draht nach Ausbilden der Aussparungen problemlos eingeführt werden kann.

Diese Aufgabe wird bei dem eingangs genannten Befestigungsband erfindungsgemäß durch die kennzeichnenden Merkmale des Anspruchs 1 gelöst.

Durch das erfindungsgemäß vorgesehene Trennelement entsteht eine Doppelschlauchstruktur, wobei der obere Bereich einen geschlossenen Schlauch darstellt, in den selbst ein gebogener Draht ohne Probleme eingeführt werden kann. Gleichzeitig können im unteren Bereich Aussparungen in beliebiger Anzahl und Form angeordnet sein, die bereits vor dem Anbringen des Befestigungsbandes an das erste Polsterteil maschinell ausgebildet werden können.

Durch die Entfernung des Trennelements werden die beiden Bereiche miteinander verbunden, so dass der zuvor eingeführte Draht in den unteren Bereich verschoben werden kann und im Bereich der Aussparungen durch die mit dem zweiten Polsterteil verbundenen Verankerungselemente fixiert werden kann.

Das Befestigungsband kann sowohl als geschlossener Schlauch wie auch als ein gefaltetes Doppelband ausgebildet sein. Im letzteren Fall wird das Doppelband an der zunächst offenen Seite zu einer schlauchförmigen Struktur vernäht, wobei das Vernähen vorzugsweise im Zuge des Annähens des Befestigungsbandes an das erste Polsterteil erfolgt. Dabei bildet die Faltkante des Doppelbandes die dem ersten Polsterteil abgewandte Seite mit den Aussparungen.

Das erfindungsgemäße Befestigungsband ist vorzugsweise aus einem textilen Material hergestellt. Es sind jedoch auch nicht textile Materialien vorstellbar, wie zum Beispiel eine Kunststofffolie.

Bevorzugte textile Materialien sind gewebt oder gewirkt.

Alternativ können auch geflochtene, gestrickte oder non-woven Materialien verwendet werden.

Besonders bevorzugt sind gewebte Materialien, da diese dem Befestigungsband eine hohe Stabilität und Zugfestigkeit verleihen. Darüber hinaus besteht die Möglichkeit, dass die Aussparungen unmittelbar bei der webtechnischen Herstellung des Befestigungsbandes eingearbeitet werden.

Die verwendeten textilen Materialien können aus verschiedensten Faserarten wie z. B. Polyestern, Polyamiden, Baumwolle, Viskose oder Mischungen hiervon bestehen.

Bei einer Ausführungsform des erfindungsgemäßen Befestigungsbandes werden die Aussparungen aus dem Befestigungsband ausgestanzt oder ausgeschnitten. Bevorzugt werden anschließend die Schnittkanten angeflammt, um diese zu verfestigen und ein Ausfransen zu verhindern.

Bei Verwendung eines gefalteten Doppelbandes als Befestigungsband werden die Aussparungen vorzugsweise aus der Mitte des ungefalteten Bandes ausgestanzt und die beiden Ränder des Bandes anschließend miteinander und/oder mit dem ersten Polsterteil vernäht.

Bei Verwendung eines geschlossenen Schlauches als Befestigungsband können die Aussparungen an einer Faltkante des Schlauches ausgestanzt bzw. ausgeschnitten werden, während die gegenüberliegende Faltkante des Schlauches mit dem ersten Polsterteil vernäht wird.

Hinsichtlich ihrer Form, Anzahl und Abmessungen unterliegen die Aussparungen keinen grundsätzlichen Beschränkungen. Die Festlegung dieser Parameter wird in erster Linie von der Breite des Befestigungsbandes, der Dicke des verwendeten Drahtes und der Art und Größe der Verankerungselemente abhängen.

Die Aussparungen können beispielsweise eine ovale, runde oder viereckige Form aufweisen, wobei die ovale Form bevorzugt ist.

Das erfindungsgemäße Befestigungsband weist vorzugsweise eine relativ hohe Anzahl an Aussparungen auf, so dass unabhängig von der Anzahl und dem Abstand der Verankerungselemente für jedes Verankerungselement eine Aussparung in geeigneter Position zur Verfügung steht.

Bevorzugt sind die Aussparungen in regelmäßigen Abständen angeordnet, vorzugsweise in einem jeweiligen Abstand von 8 bis 15 mm.

Bevorzugt weisen die Aussparungen in Längsrichtung des Befestigungsbandes eine Abmessung von 6 bis 10 mm auf.

In Querrichtung des Befestigungsbandes haben die Aussparungen vorzugsweise eine Abmessung von 5 bis 8 mm. Dieser Wert bezieht sich auf die Ausdehnung der Aussparungen in einer Lage des flachliegenden Befestigungsbandes.

Das erfindungsgemäße Befestigungsband weist vorzugsweise eine Breite von 10 bis 50 mm auf, noch bevorzugter 17 bis 25 mm.

Das Trennelement ist bei dem erfindungsgemäßen Befestigungsband vorzugsweise ein Faden. Dieser ist in das Befestigungsband so eingearbeitet, dass er die beiden sich gegenüberliegenden Lagen des schlauchförmigen Befestigungsbandes entlang einer in Längsrichtung verlaufenden Linie zusammenhält.

Bei einer Ausführungsform des erfindungsgemäßen Befestigungsbandes ist der Faden in das Befestigungsband eingewoben und durch Zug in Längsrichtung entfernbar. Bei einer webtechnischen Herstellung des Befestigungsbandes kann der Faden des Trennelements unmittelbar während des Webvorgangs mit eingearbeitet werden.

Bei einer weiteren Ausführungsform des erfindungsgemäßen Befestigungsbandes ist dieses mit dem Faden so vernäht, dass der Faden durch Zug in Längsrichtung entfernbar ist. Hierbei handelt es sich bevorzugt um eine Kettelnaht, die durch Zug an einem der Enden des Fadens vollständig gelöst werden kann.

Bei einer anderen Ausführungsform des erfindungsgemäßen Befestigungsbandes ist das Trennelement durch Wärmeeinwirkung entfernbar. Dabei kann das Befestigungsband, wie oben beschrieben, mit einem Faden aus einem thermolabilen Material vernäht oder verwebt sein. Durch eine Erwärmung des Befestigungsbandes nach Einführen des Drahtes wird der Faden brüchig oder instabil, so dass die Verbindung zwischen den gegenüberliegenden Lagen des Befestigungsbandes gelöst wird.

Bei einer weiteren Ausführungsform des erfindungsgemäßen Befestigungsbandes ist das Trennelement durch Wasserdampfeinwirkung entfernbar. Dabei wird zum Beispiel ein Faden aus einem wasserlöslichen Material verwendet, so dass die Verbindung zwischen den gegenüberliegenden Lagen des Befestigungsbandes durch eine Behandlung mit Wasserdampf gelöst werden kann.

Im Folgenden wird die vorliegende Erfindung unter Bezugnahme auf die Figuren der Zeichnung näher erläutert. Es zeigen im Einzelnen:
- Figur 1:: eine schematische Darstellung eines erfindungsgemäßen Befestigungsbandes und dessen Verwendung;
- Figur 2:: eine schematische Darstellung einer Befestigung eines ersten Polsterteils an einem zweiten Polsterteil unter Verwendung eines erfindungsgemäßen Befestigungsbandes; und
- Figur 3:: eine schematische Darstellung eines webtechnisch hergestellten erfindungsgemäßen Befestigungsbandes.

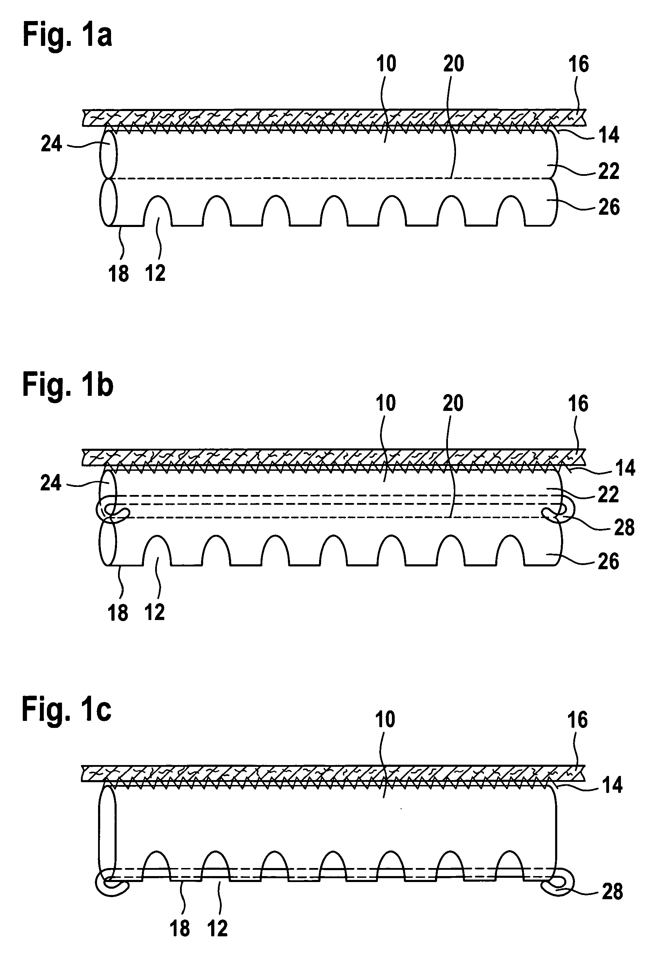

In der Figur 1a ist ein Ausführungsbeispiel eines erfindungsgemäßen Befestigungsbandes dargestellt und als Ganzes mit 10 bezeichnet. Bei dem Befestigungsband 10 handelt es sich um ein gefaltetes Doppelband, aus dem vor dem Falten entlang einer Mittellinie in regelmäßigen Abständen ovale Aussparungen 12 ausgestanzt wurden. Das Befestigungsband 10 ist entlang dieser Mittellinie gefaltet und die beiden Ränder sind durch eine Naht 14 mit einem ersten Polsterteil 16 verbunden, so dass das Befestigungsband 10 eine schlauchförmige Struktur aufweist.

Die Mittellinie des gefalteten Bandes bildet dabei die dem ersten Polsterteil 16 abgewandte Seite 18 des Befestigungsbandes, so dass sich die ovalen Aussparungen 12 je zur Hälfte über die beiden einander gegenüberliegenden Lagen des Befestigungsbandes 10 erstrecken und bei der in Figur 1 dargestellten Seitenansicht als Halbovale erscheinen.

Das Befestigungsband 10 weist ferner einen Faden 20 als Trennelement auf, der eine in Längsrichtung des Befestigungsbandes 10 verlaufende Kettelnaht bildet. Durch den Faden 20 werden die beiden gegenüberliegenden Lagen des Befestigungsbandes entlang der Kettelnaht zusammengehalten, so dass zwei voneinander getrennte, schlauchförmige Bereiche 22 und 26 gebildet werden. Der obere, dem ersten Polsterteil 16 zugewandte Bereich 22 ist seitlich geschlossen und weist lediglich Öffnungen 24 an beiden Enden auf, während die Aussparungen 12 in dem unteren, dem ersten Polsterteil 16 abgewandten Bereich 26 angeordnet sind.

In den oberen Bereich 22 kann durch eine der seitlichen Öffnungen 24 ein Draht 28 eingeführt werden, wie dies in der Figur 1b dargestellt ist. Da der obere Bereich 22 seitlich geschlossen ist, kann der Draht 28 auch dann mühelos eingeführt werden, wenn er aufgrund der Struktur des Polstersitzes gebogen ist.

Um das Einführen des Drahtes 28 zusätzlich zu erleichtern werden dessen Enden zuvor umgebogen. Diese umgebogenen Enden verhindern anschließend auch ein Herausgleiten des Drahtes 28 aus dem Befestigungsband 10.

Sobald der Draht 28 in das Befestigungsband 10 eingeführt ist, kann der Faden 20 durch Zug in Längsrichtung entfernt werden, wodurch die Kettelnaht gelöst wird und die beiden Bereiche 22 und 26 vereinigt werden. Der Draht 28 kann nun in den unteren Bereich 26, das heißt zu der dem ersten Polsterteil abgewandten Seite 18, verschoben werden, wie dies in der Figur 1c dargestellt ist.

Die Zugrichtung, in welche der Faden 20 entfernt werden muss, kann durch entsprechende Markierungen auf dem Befestigungsband 10, wie z. B. aufgedruckte Pfeile, angezeigt werden.

Das erste Polsterteil 16 kann nun mit einem zweiten Polsterteil 30 dadurch verbunden werden, dass mit dem zweiten Polsterteil 30 verbundene Verankerungselemente 32 in die Aussparungen 12 eingreifen und den Draht 28 fixieren.

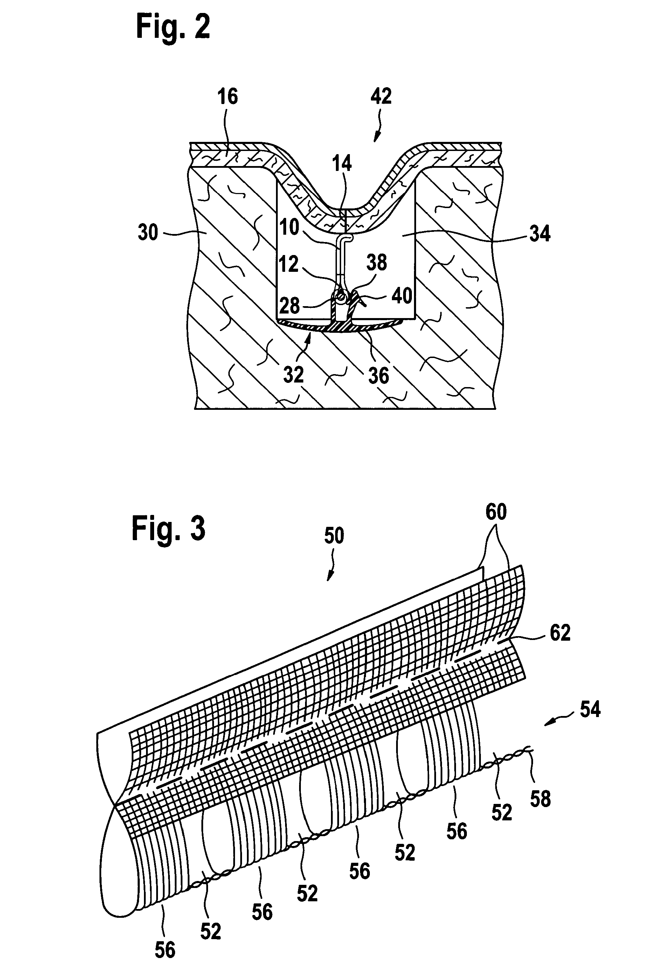

Dies ist in der Figur 2 gezeigt, wobei das Befestigungsband 10 im Querschnitt dargestellt ist.

Das zweite Polsterteil 30 ist ein Schaumstoffkörper mit Ausnehmungen 34, welche zu dem ersten Polsterteil 16 hin orientiert sind und sich in Richtung des Befestigungsbandes 10 längs erstrecken. In der Ausnehmung 34 sind Verankerungselemente 32 angeordnet.

Die Verankerungselemente 32 umfassen jeweils ein flaches Bodenteil 36, welches in das Schaumstoffmaterial des zweiten Polsterteils 30 eingebettet ist und von diesem gehalten wird. Ferner umfasst jedes Verankerungselement einen in Richtung auf das erste Polsterteil 16 hin orientierten Haken 38, welcher in eine Aussparung 12 des Befestigungsbandes 10 eingreift und den Draht 28 in Bezug auf das zweite Polsterteil 30 fixiert. Zusätzlich umfasst das Verankerungselement 32 ein Sicherungselement 40, welches sich gegen die offene Seite des Hakens 38 abstützt und verhindert, dass sich der Draht 28 aus der Fixierung durch den Haken 38 löst.

Da der Abstand der einzelnen Verankerungselemente 32 größer ist als der Abstand der Aussparungen 12 des Befestigungsbandes 10, wird nur ein Teil der Aussparungen 12 zur Fixierung des Drahtes 28 benötigt. Durch die relativ hohe Anzahl an Aussparungen 12 wird jedoch sichergestellt, dass für jedes Verankerungselement 32 eine entsprechende Aussparung 12 vorhanden ist.

Anstelle der in Figur 2 dargestellten Verankerungselemente 32, die in bestimmten Abständen an dem zweiten Polsterteil 30 angeordnet sind, können bei Verwendung des erfindungsgemäßen Befestigungsbandes 10 auch Metallklammern als Verankerungselemente zum Einsatz kommen. Durch derartige Klammern kann der Draht 28 an einen zweiten, parallel verlaufenden, mit dem zweiten Polsterteil verbundenen Draht fixiert werden. Auch bei dieser Variante werden in der Regel nicht alle Aussparungen 12 für die Verklammerung der beiden Drähte verwendet, sondern nur einige der Aussparungen 12 in individuell festlegbaren Abständen.

Unabhängig von der Art der Verankerungselemente wird durch die Fixierung des Drahtes 28 eine Zugkraft in Richtung auf das zweite Polsterteil 30 erzeugt, wodurch sich im ersten Polsterteil 16 entlang des Befestigungsbandes 10 eine in das zweite Polsterteil 30 hinein verlaufende Vertiefung 42 ausbildet.

In der Figur 3 ist der Aufbau eines webtechnisch hergestellten erfindungsgemäßen Befestigungsbandes, welches mit 50 bezeichnet ist, schematisch dargestellt.

Das Befestigungsband 50 wird als offenes Schlauchband, d. h. in Form eines gefalteten Doppelbandes gewebt, wobei die Kettfäden in Längsrichtung und die Schussfäden in Querrichtung des Befestigungsbandes 50 verlaufen. Aus Gründen der Übersichtlichkeit sind in der Figur 3 nur die Kett- und Schussfäden der vorderen Lage des Doppelbandes eingezeichnet.

Die Aussparungen 52 des Befestigungsbandes 50 werden während des Webvorgangs dadurch gebildet, dass im Bereich der Faltkante 54 des Doppelbandes keine Kettfäden vorhanden sind und die Schussfäden nur in bestimmten Abschnitten über diesen Bereich geführt werden. Diese Abschnitte, in denen die Schussfäden freie Schlaufen bilden, stellen die Stege 56 zwischen den Aussparungen 52 dar. In den dazwischenliegenden Abschnitten der Aussparungen 52 werden die Schussfäden lediglich über den mit Kettfäden belegten Bereich der beiden Lagen des Doppelbandes geführt.

Die Schlaufen der Schussfäden, welche die Stege 56 bilden, können durch zwei entlang der Faltkante 54 verlaufende Dreherfäden 58 miteinander verbunden werden, wodurch das Befestigungsband 50 insgesamt stabilisiert wird.

Die beiden Ränder 60 des Befestigungsbandes 50 werden zur Fixierung während des Webvorgangs umkettelt und anschließend miteinander und/oder mit dem ersten Polsterteil vernäht, um die schlauchförmige Struktur des Befestigungsbandes 50 auszubilden.

Auch ein als Trennelement dienender Faden 62 kann bereits während des Webvorgangs in das Befestigungsband 50 eingearbeitet werden. Hierfür wird ein Kettfaden jeweils über einen bestimmten Abschnitt von Schussfäden oberhalb bzw. unterhalb der beiden Lagen des Doppelbandes geführt. Die derart miteinander verwobenen Lagen können durch einfaches Herausziehen des Fadens 62 in Längsrichtung wieder voneinander gelöst werden.

Das Befestigungsband 50 weist damit den Vorteil auf, dass sowohl die Aussparungen 52 als auch der als Trennelement dienende Faden 62 innerhalb eines einheitlichen, automatisierbaren Herstellungsverfahrens eingearbeitet werden können.

Alternativ zu dem in Figur 3 dargestellten Befestigungsband 50 kann ein entsprechendes Befestigungsband auch als geschlossenes Schlauchband gewebt werden. Dieses wird dann entlang der den offenen Schlaufen gegenüberliegenden Schlauchkante mit dem ersten Polsterteil vernäht. Die Einarbeitung der Ausnehmungen und des Trennelements erfolgt auch in diesem Fall gemäß dem oben beschriebenen Verfahren.

## Patentansprüche

1. Befestigungsband (10) zum Befestigen eines ersten Polsterteils (16) an einem zweiten Polsterteil (30) bei Polstersitzen, insbesondere in Kraftfahrzeugen, wobei das Befestigungsband (10) schlauchförmig ausgebildet ist, in Längsrichtung mit dem ersten Polsterteil (16) verbunden ist und an der dem ersten Polsterteil (16) abgewandten Seite (18) Aussparungen (12) aufweist, so dass mit dem zweiten Polsterteil (30) verbundene Verankerungselemente (32) in die Aussparungen (12) eingreifen und einen in das Befestigungsband (10) einführbaren Draht (28) fixieren können, wodurch das erste Polsterteil (16) an dem zweiten Polsterteil (30) befestigbar ist, **dadurch gekennzeichnet, dass** das Befestigungsband (10) ein entfernbares Trennelement (20) aufweist, welches das Befestigungsband (10) in Längsrichtung in zwei getrennte, schlauchförmige Bereiche (22, 26) unterteilt, wobei in den oberen, dem ersten Polsterteil (16) zugewandten Bereich (22) der Draht (28) in Längsrichtung einführbar ist, und wobei die Aussparungen (12) in dem unteren, dem ersten Polsterteil (16) abgewandten Bereich (26) angeordnet sind, so dass bei Entfernung des Trennelements (20) der eingeführte Draht (28) in den unteren Bereich (26) verschiebbar ist.

2. Befestigungsband nach Anspruch 1, wobei das Befestigungsband (10) ein geschlossener Schlauch ist.

3. Befestigungsband nach Anspruch 1, wobei das Befestigungsband (10) ein gefaltetes Doppelband ist.

4. Befestigungsband nach einem der vorangehenden Ansprüche, wobei das Befestigungsband (10) aus einem textilen Material hergestellt ist.

5. Befestigungsband nach Anspruch 4, wobei das textile Material gewebt oder gewirkt ist.

6. Befestigungsband nach Anspruch 5, wobei die Aussparungen (52) webtechnisch in das Befestigungsband (50) eigearbeitet sind.

7. Befestigungsband nach einem der vorangehenden Ansprüche, wobei die Aussparungen (12) aus dem Befestigungsband ausgestanzt oder ausgeschnitten sind.

8. Befestigungsband nach einem der vorangehenden Ansprüche, wobei die Aussparungen (12) eine ovale, runde oder viereckige Form aufweisen.

9. Befestigungsband nach einem der vorangehenden Ansprüche, wobei die Aussparungen (12) in regelmäßigen Abständen angeordnet sind.

10. Befestigungsband nach Anspruch 9, wobei die Aussparungen (12) in einem Abstand von 8 bis 15 mm angeordnet sind.

11. Befestigungsband nach einem der vorangehenden Ansprüche, wobei die Aussparungen (12) in Längsrichtung des Befestigungsbandes (10) eine Abmessung von 6 bis 10 mm aufweisen.

12. Befestigungsband nach einem der vorangehenden Ansprüche, wobei die Aussparungen (12) in Querrichtung des Befestigungsbandes (10) eine Abmessung von 5 bis 8 mm aufweisen.

13. Befestigungsband nach einem der vorangehenden Ansprüche, wobei das Befestigungsband (10) eine Breite von 10 bis 50 mm aufweist.

14. Befestigungsband nach Anspruch 13, wobei das Befestigungsband (10) eine Breite von 17 bis 25 mm aufweist.

15. Befestigungsband nach einem der vorangehenden Ansprüche, wobei das Trennelement ein Faden (20) ist.

16. Befestigungsband nach Anspruch 15, wobei der Faden (62) in das Befestigungsband (50) eingewoben ist und durch Zug in Längsrichtung entfernbar ist.

17. Befestigungsband nach Anspruch 15, wobei das Befestigungsband (10) mit dem Faden (20) so vernäht ist, dass der Faden (20) durch Zug in Längsrichtung entfernbar ist.

18. Befestigungsband nach einem der vorangehenden Ansprüche, wobei das Trennelement durch Wärmeeinwirkung entfernbar ist.

19. Befestigungsband nach einem der vorangehenden Ansprüche, wobei das Trennelement durch Wasserdampfeinwirkung entfernbar ist.
